Europäisches Patentamt

European Patent Office

Office européen des brevets

(11) Publication number: **0 244 887**
**B1**

# EUROPEAN PATENT SPECIFICATION

(45) Date of publication of the patent specification:
**20.12.89**

(51) Int. Cl.⁴: **A 22 C 21/00**

(21) Application number: **87200589.7**

(22) Date of filing: **30.03.87**

(54) **Breast skinner.**

(30) Priority: **28.04.86 NL 8601087**

(43) Date of publication of application:
**11.11.87 Bulletin 87/46**

(45) Publication of the grant of the patent:
**20.12.89 Bulletin 89/51**

(84) Designated Contracting States:
**DE ES FR GB IT NL**

(56) References cited:
**EP-A- 0 118 963**
**EP-A- 0 159 744**
**EP-A- 0 164 167**
**DE-A- 3 334 006**
**NL-A- 8 302 207**
**US-A- 3 930 283**
**US-A- 4 459 721**
**US-A- 4 557 017**

(73) Proprietor: **STORK PMT B.V., Handelstraat 3,
NL-5831 AV Boxmeer (NL)**

(72) Inventor: **Janssen, Petrus C. H., Verbindingsweg 5,
NL-5455 GP Wilbertoord (NL)**
Inventor: **Van de Nieuwelaar, Joseph A., Haardseweg 26,
NL-5421 XS Gemert (NL)**

(74) Representative: **Timmers, Cornelis Herman Johannes et
al, EXTERPATENT P.O. Box 90649, NL-2509 LP
's-Gravenhage (NL)**

## Description

The invention relates to a device for removing the breast skin from a poultry carcass which is conveyed breast first and hanging by the legs from a conveyor track.

In view of the constantly progressing mechanisation of dividing-up poultry carcasses — where the carcass, hanging by the legs, is conveyed through a number of successive processing stations and is subjected there to dividing-up operations, there is a need for a device by means of which the breast skin can be removed from the carcass in a reliable manner. The object of the invention is to produce such a device.

The device proposed for this according to the invention is characterized by a V-shaped guide face for the breast of the carcass, said guide face being disposed below the conveyor track and being open towards the conveyor track, and two V-shaped breast skin separating elements which are disposed above the said guide face symmetrically relative to the central longitudinal plane thereof, with the points directed against the direction of conveyance, and the opposite faces of which include an acute angle, with at the top rear end opposite to the respective points of each of the separating elements an oblong-shaped cutting element lying outside the plane thereof and facing the guide face, with a cutting face directed against the direction of conveyance, in the direction of conveyance followed by at least one set of pinch rollers, situated under the guide face, driven in counter-rotation, and provided with longitudinal intermeshing toothing.

Preferred embodiments of this device are described in Claims 2 to 7, in connection with which it is pointed out that the use of two sets of pinch rollers as referred to in Claim 6 has the advantage that the device can process carcasses of differing sizes: if the breast skin of small carcasses is not gripped by the first set of rollers, it is in any case gripped by the second set.

It is pointed out that the use of two pinch rollers for gripping and pulling away the breast skin of a carcass part, at least one of which rollers being provided with helical grooves, is known per se from Dutch Patent Application 8 302 207 in the name of the applicants; this known device is, however, suitable only for the removal of the breast skin from a breast piece without legs and wings, the skin of which has thus already been cut into at different places.

The invention is explained with reference to the drawings.

Figure 1 is a perspective drawing of the complete device according to the invention;

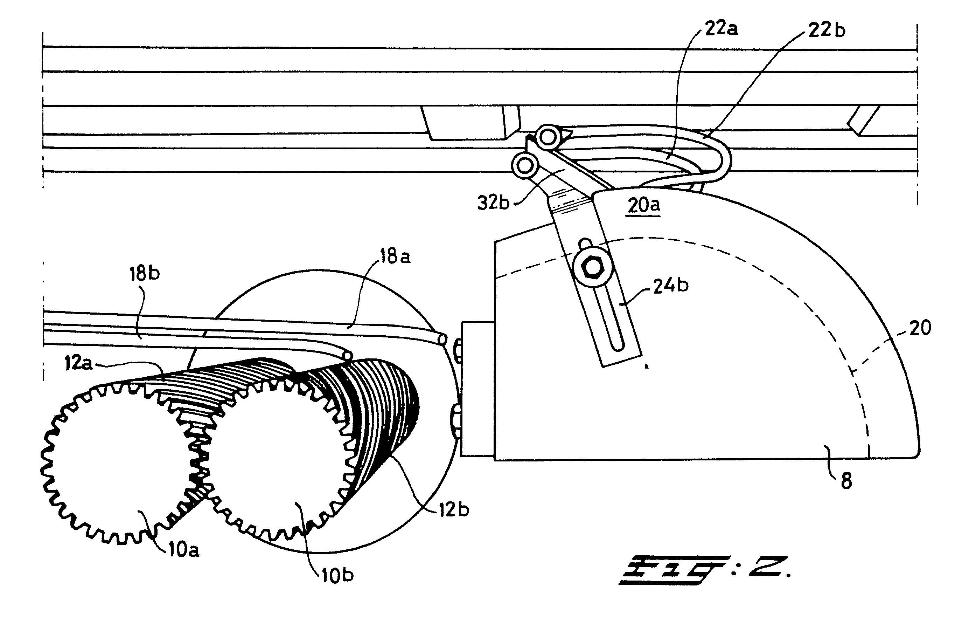

Figure 2 shows on a larger scale the breast guide with separating elements;

Figure 3 is a top view of the breast guide with separating elements;

Figure 4 is a front view of the breast guide with separating elements, with reference to which the separating action is explained.

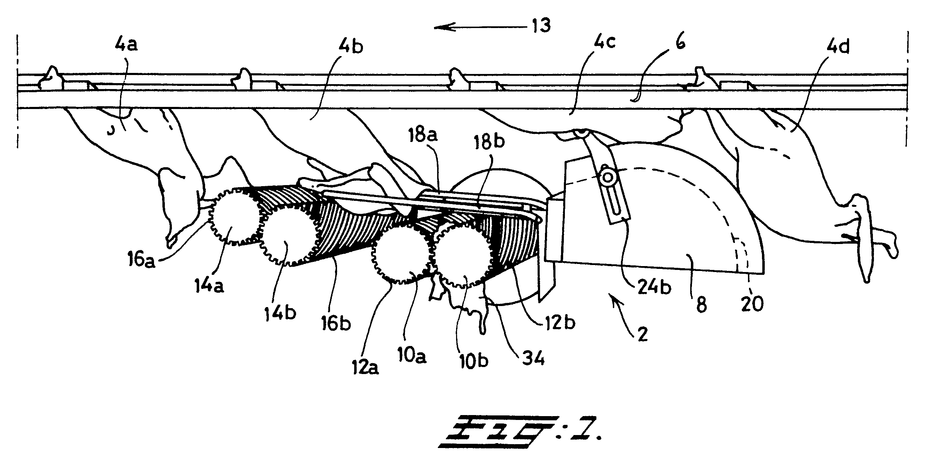

The device according to the invention, indicated in Figure 1 in its entirety by the reference number 2 will in general be used as part of a plant in which a poultry carcass is subjected to a number of dividing-up operations. The poultry carcasses, indicated by the numbers 4a, 4b, 4c and 4d are conveyed through the plant, hanging by the legs from a conveyor track 6, which is, for example, of the type described in European Patent application 85 200 366.4.

The plant illustrated comprises a breast guide element 8 with separating elements to be described further, followed in the direction of conveyance by a first set of pinch rollers 10a, 10b, each provided with helical teeth 12a, 12b, running in the longitudinal direction and engaging with each other, and rotatingly driven in opposite directions by means of a drive which is not shown, and in the direction of conveyance, as indicated by the arrow 13, followed by a second set of pinch rollers 14a, 14b, also provided with teeth 16a, 16b, and driven so as to rotate in opposite directions. The pinch rollers 10a, 10b and 14a, 14b are at a lower level than the highest point of the breast guide 8, and the distance of the pinch rollers 14a, 14b from the conveyor track 6 is smaller than the distance of the pinch rollers 10a, 10b from said conveyor track.

Above the rollers 10a, 10b, 14a, 14b are two wing guide bars 18a and 18b.

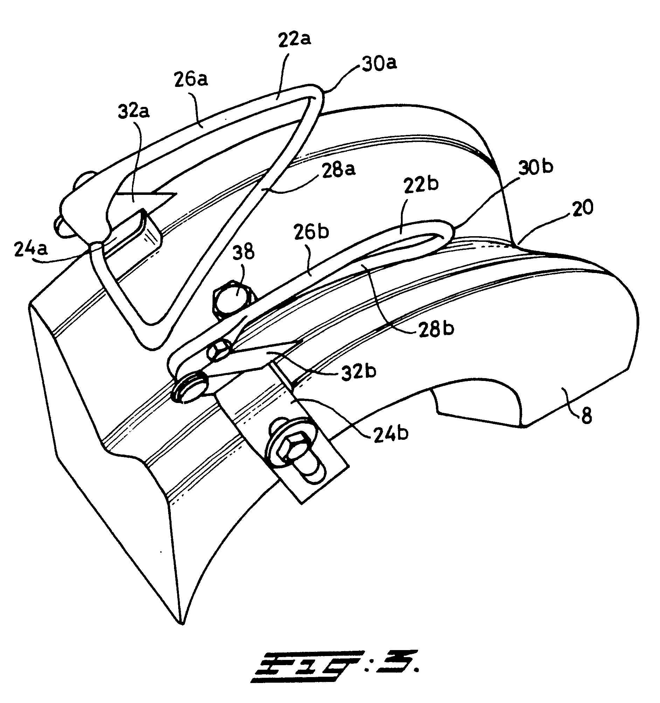

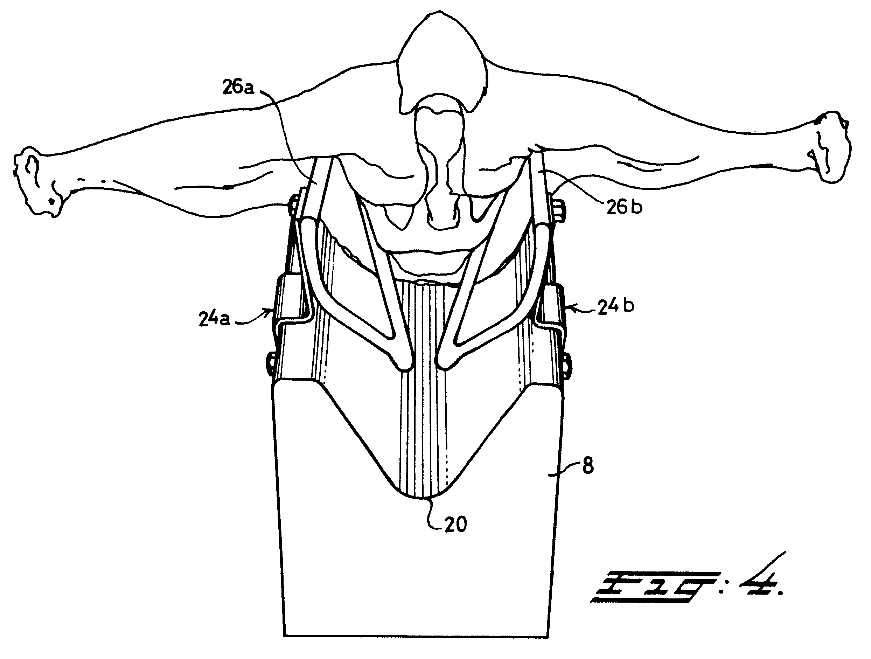

The structure of the breast guide and the separating elements disposed thereon can be seen from Figures 3 and 4. In the embodiment shown the breast guide 8 is formed by a block of plastic in which a quadrantal V-shaped guide groove 20 is formed. Of course, a configuration differing from this circular one is also possible, and the breast guide element 8 can be made of, for example, sheet material. Disposed near the highest point 20a of the groove 20 is a breast skin separating element 22a, 22b on either side of the central longitudinal face of said groove; each separating element is fixed by means of a fixing bracket 24a, 24b to the breast guide element 8. Each separating element 22a, 22b as shown is designed as a bow made of bar material with a top part 26a, 26b running essentially parallel to the conveyor track, a bottom piece 28a, 28b forming an acute angle therewith and running towards the bottom of the guide groove 20, and a cross piece 30a, 30b. As can be seen from the figures, the angle included by the planes through the bow parts 26a, 28a, on the one hand, and 26a, 26b, on the other, looking from the input points 30a, 30b in the direction of conveyance, gradually increases and reaches the maximum value at the point of the cross connection 30a, 30b. It will be appreciated that a separating element made of sheet material can also be used, instead of a bow-shaped separating element.

The bows 28a, 28b also carry cutting knives 32a, 32b including an angle of about 45 degrees with the direction of conveyance.

The device operates as follows (see also Figure 4):

Each carcass hanging by the legs, such as carcass 4d, reaches the breast supporting element 8 during its conveyance through the device and, starting from the position shown for the carcass 4d, gradually assumes the position as shown for the carcass 4c, in which the carcass is thus lying virtually horizontally below the conveyor track 6. During this movement the points 30a, 30b of the separating elements 22a, 22b penetrate at the groins between the skin and the carcass; during the further movement the skin is pressed upwardly to the left and right of the separating elements 22a, 22b and held taut, and when the skin is at its most taut when passing the widest part, it is finally cut through by the knives 32a, 32b. The breast skin now hanging down and still partially attached to the carcass, such as the breast skin 34 as shown for the carcass 4b, comes between the pinch rollers 10a, 10b and is pulled away from the carcass; finally, the breast 36 of the carcass has the breast skin 34 completely removed from it.

If — as can happen in the case of a smaller bird — the breast skin is not gripped by the first set of pinch rollers 10a, 10b, it is sure to be gripped by the second set of pinch rollers 14a, 14b and removed by them.

It can be desirable — in particular for handling small birds — to provide on the bottom of the guide groove 20 of the breast supporting element 8 near the highest point thereof and between the separating elements 22a, 22b a pressure piece 38 projecting from the groove, for the purpose of pressing the breast bone of the bird upwards to some extent during the running in of the separating elements 22a, 22b.

## Claims

1. Device for removing the breast skin (34) from a poultry carcass (4a .. 4d) which is conveyed breast first and hanging by the legs from a conveyor track (6), characterized by a V-shaped guide face (20) for the breast of the carcass, said guide face (20) being disposed below the conveyor track (6) and being open towards the conveyor track (6), and two V-shaped breast skin separating elements (22a, 22b) which are disposed above the said guide face (20) symmetrically relative to the central longitudinal plane thereof, with the points (30a, 30b) directed against the direction of conveyance (13), and the opposite faces of which include an acute angle, with at the top rear end opposite to the respective point (30a, 30b) of each of the separating elements an oblong-shaped cutting element (32a, 32b) lying outside the plane thereof and facing the guide face (20), with a cutting face directed against the direction of conveyance (13), in the direction of conveyance (13) followed by at least one set of pinch rollers (10a, 10b), situated under the guide face (20), driven in counter-rotation, and provided with longitudinal intermeshing toothing (12a, 12b).

2. Device according to Claim 1, characterized in that the V-shaped guide face (20) is designed running in the direction of conveyance (13) up to the conveyor track (6), and the separating elements (22a, 22b) are disposed near the highest point thereof.

3. Device according to Claim 1 or 2, characterized in that the angle included by the separating elements (22a, 22b) gradually increases from the input points 30a, 30b) thereof in the direction of conveyance.

4. Device according to Claim 1 to 3, characterized by a pressure piece (38) projecting from the bottom of the breast guide face (20) near the end of the separating elements (22a, 22b).

5. Device according to Claim 1 to 4, characterized in that the cutting elements (32a, 32b) include an angle of about 45 degrees with the direction of conveyance (13).

6. Device according to Claim 1 to 5, characterized by a second set of pinch rollers (14a, 14b) disposed further on than the first set (10a, 10b) as seen in the direction of conveyance (13), and at a higher level than the first set (10a, 10b).

7. Device according to Claim 1 to 6, characterized by two wing guide bars (18a, 18b) disposed on either side of the longitudinal central plane of the conveyor device (6) above the pinch rollers (10a, 10b, 14a, 14b).

## Patentansprüche

1. Vorrichtung zum Entfernen der Brusthaut (34) von geschlachtetem Geflügel (4a .. 4d), welches mit der Brust nach vorn und mit den Schenkeln von einer Förderbahn (6) herabhängend gefördert wird, gekennzeichnet durch eine V-förmige Führungsfläche (20) für die Brust des geschlachteten Geflügels, wobei diese Führungsfläche (20) unterhalb der Förderbahn (6) angeordnet und nach der Führungsbahn (6) hin geöffnet ist, und zwei V-förmige Brusthaut-Abtrennelemente (22a, 22b), welche oberhalb der besagten Führungsfläche (20) symmetrisch bezogen auf deren mittlere Längsebene mit den Spritzen (30a, 30b) entgegen der Förderrichtung (13) gerichtet angeordnet sind, und deren entgegengesetzten Flächen einen spitzen Winkel einschließen, wobei an dem oberen rückwärtigen Ende entgegengesetzt zu den betreffenden Spitzen (30a, 30b) an jedem der Abtrennelemente ein länglich geformtes Schneidelement (32a, 32b) außerhalb deren Ebene und nach der Führungsfläche (20) zu liegt, mit einer Schneidefläche, die entgegen der Förderrichtung (13) gerichtet ist, wobei ferner in der Förderrichtung (13) mindestens ein Satz von Klemmrollen (10a, 10b) folgt, die unter der Führungsfläche (20) angebracht sind, in Gegendrehung angetrieben und mit längsverlaufenden ineinandergreifenden Verzahnungen (12a, 12b) versehen sind.

2. Vorrichtung nach Anspruch 1, dadurch gekennzeichnet, daß die V-förmige Führungsfläche (20) so gestaltet ist, daß sie in Förderrichtung (13) nach der Förderbahn (6) ansteigt und daß die Abtrennelemente (22a, 22b) nahe deren höchsten Punkt angeordnet sind.

3. Vorrichtung nach Anspruch 1 oder 2, dadurch gekennzeichnet, daß der Winkel, der von den Abtrennelementen (22a, 22b) eingeschlossen ist, fortschreitend von deren Eingangspunkten (30a, 30b) in Förderrichtung sich vergrößert.

4. Vorrichtung nach Anspruch 1 bis 3, gekennzeichnet durch ein Druckstück (38), welches von dem Boden der Brust-Führungsfläche (20) nahe dem Ende der Abtrennelemente (22a, 22b) hervorragt.

5. Vorrichtung nach Anspruch 1 bis 4, dadurch gekennzeichnet, daß die Schneidelemente (32a, 32b) einen Winkel von etwa 45 Grad mit der Förderrichtung (13) einschließen.

6. Vorrichtung nach Anspruch 1 bis 5, gekennzeichnet durch einen zweiten Satz von Klemmrollen (14a, 14b), welche in Förderrichtung (13) gesehen weiter als der erste Satz (10a, 10b) und auf einem höheren Niveau als der erste Satz (10a, 10b) angeordnet sind.

7. Vorrichtung nach Anspruch 1 bis 6, gekennzeichnet durch zwei Flügelführungsstangen (18a, 18b), welche auf jeder Seite der mittleren Längsebene der Fördervorrichtung (6) oberhalb der Klemmrollen (10a, 10b, 14a, 14b) angeordnet sind.

**Revendications**

1. Dispositif pour enlever la peau de la poitrine (34) de la carcasse de la volaille (4a .. 4d) transportée la poitrine en avant et pendue par les pattes d'un rail de convoyage (6), caractérisé par une face de guidage en V (20) pour la poitrine de la carcasse, ladite face de guidage (20) étant placée sous le rail de convoyage (6) et ouverte vers le rail de convoyage (6), et deux éléments en V de séparation de la peau de la poitrine (22a, 22b) placés au-dessus de ladite face de guidage (20) symétriquement par rapport au plan longitudinal central de celle-ci, avec leurs pointes (30a, 30b) dirigées dans le sens inverse du sens de transport (13), leurs faces opposées faisant un angle aigu, avec l'extrémité supérieure arrière opposée aux pointes respectives (30a, 30b) de chacun des éléments de séparation, un élément coupant de forme oblongue (32a, 32b) situé à l'extérieur du plan et faisant face à la face de guidage, avec une face coupante dirigée en sens inverse du sens de transport (13) dans la direction du transport (20), suivi par au moins un jeu de rouleaux de pincement (10a, 10b), montés sous la face de guidage (20), entraînés en rotation en sens inverse, et munis d'une denture d'engrenage longitudinale (12a, 12b).

2. Dispositif selon la revendication 1, caractérisé en ce que la pièce de guidage en V (20) est représentée circulant vers dans la direction du convoyeur (13) sur le rail de convoyage (6), et les éléments de séparation (22a, 22b) sont montés près du plus haut point de ces derniers.

3. Dispositif selon la revendication 1 ou 2, caractérisé en ce que l'angle formé par les éléments de séparation (22a, 22b) augmente graduellement à partir des points d'entrée (30a, 30b) dans la direction du convoyeur.

4. Dispositif selon la revendication 1 à 3, caractérisé par une pièce pression (38) en saillie au fond de la pièce de guidage de la poitrine (20) près de l'extrémité des éléments de séparation (22a, 22b).

5. Dispositif selon la revendication 1 à 4, caractérisé en ce que les éléments coupants (32a, 32b) forment un angle d'environ 45° avec la direction du convoyeur (13).

6. Dispositif selon la revendication 1 à 5, caractérisé par un second jeu de rouleaux de pincement (14a, 14b) montés en plus du premier jeu (10a, 10b) comme montré dans la direction du convoyeur (13), et placé à un niveau plus élevé que le premier jeu (10a, 10b).

7. Dispositif selon la revendication 1 à 6, caractérisé par deux barres de guidage latérales (18a, 18b) situées de chaque côté du plan central longitudinal du dispositif de convoyage (6) au-dessus des rouleaux de pincement (10a, 10b, 14a, 14b).

_Fig:1._

EP 0 244 887 B1

22a 22b

32b

20a

18a

18b

12a

24b

20

8

10a

10b

12b

FIG: 2.

EP 0 244 887 B1

FIG:5.

Fig. 4.

EP 0 244 887 B1